# EUROPÄISCHE PATENTANMELDUNG

(11) **EP 3 862 186 A1**
(43) Veröffentlichungstag der Anmeldung: **11.08.2021**
(21) Anmeldenummer: 20155548.9
(22) Anmeldetag: 05.02.2020
(51) Int. Cl.: B41F 33/00, B41F 33/16

(54) **FLEXIBLE ABARBEITUNG DER JOB QUEUE**

(71) Anmelder: Heidelberger Druckmaschinen AG, 69115 Heidelberg (DE)
(72) Erfinder: Klüpfel, Martin, 68766 Hockenheim (DE)

(57) **Zusammenfassung**

Die Erfindung betrifft ein Verfahren zur automatischen Produktion von Bedruckstoffen auf wenigstens einer Druckmaschine (4) mit wenigstens einem Rechner (5), wobei dem Rechner (5) Druckaufträge (2) in einer Druckerwarteschlange (1) zugeführt werden. Die Erfindung zeichnet sich dadurch aus, dass der Rechner (5) die Druckaufträge (2) in der Druckerwarteschlange (1) vor dem Abarbeiten hinsichtlich vorgegebener Mindestmengen analysiert und dass die Druckaufträge (2) auf der Druckmaschine (4) erst dann abgearbeitet werden, wenn ein Schwellwert einer vorgegebenen Mindestmenge erreicht wird.

## Beschreibung

Die vorliegende Erfindung betrifft ein Verfahren zur automatischen Produktion von Bedruckstoffen auf wenigstens einer Druckmaschine mit wenigstens einem Rechner, wobei dem Rechner Druckaufträge in einer Druckerwarteschlange zugeführt werden.

Moderne Druckereien sind mit einem großen Maschinenpark von mehreren Druckmaschinen und Maschinen für die Druckweiterverarbeitung ausgerüstet, welche über Netzwerkverbindungen mit Bedienrechnern und dem Internet kommunizieren können. Über das Internet werden der Druckerei Druckaufträge von Kunden zugeführt, welche die Druckerei auf ihrem Maschinenpark abarbeitet. Dabei werden die Druckaufträge aufgrund ihrer Auftragsdaten den passenden Druckmaschinen zugeordnet, so, dass die Druckaufträge auf der dazu passenden Druckmaschine abgearbeitet werden können. Um wirtschaftlich arbeiten zu können, werden üblicherweise mehrere Druckaufträge nacheinander auf einer Druckmaschine abgearbeitet. Die Druckaufträge für eine Druckmaschine werden dabei in einer Druckerwarteschlange verarbeitet, so wie dies auch bei Office-Druckern üblich ist. Der Drucker bzw. die Druckmaschine arbeitet dann die in der Druckerwarteschlange vorhandenen Druckaufträge nacheinander ab. Sobald die Druckerwarteschlange leerläuft, wird der Office-Drucker bzw. die Druckmaschine in einen Standby-Betrieb geschaltet. Dies ist bei Office-Druckern problemlos möglich, da hier der Office-Drucker, abgesehen von einer kurzen Aufwärmphase, meist problemlos vom Standby-Betrieb wieder in den Druckbetrieb geschaltet werden kann, wenn neue Druckaufträge in der Druckerwarteschlange anstehen. Bei einer industriellen Druckmaschine, insbesondere bei Offsetdruckmaschinen oder anderen Druckmaschinen mit Druckplatten, ist dies nicht so einfach möglich, da hier für die Inbetriebnahme der Druckmaschine umfangreiche Rüstarbeiten, wie das Wechseln der Druckplatte und insbesondere auch der Auf- und Abbau von Farbprofilen in den einzelnen Druckwerken der Druckmaschine erforderlich ist. Insbesondere wenn eine Offsetdruckmaschine längere Zeit im Standby-Betrieb ist, muss sichergestellt werden, dass die Farbverteilung in den Druckwerken für den nachfolgenden Druckvorgang korrekt eingestellt ist, da sonst viel Makulatur produziert wird. Grundsätzlich wird durch häufiges An- und Abstellen einer Office-Druckmaschine die Menge an Makulatur deutlich erhöht.

Es ist Aufgabe der vorliegenden Erfindung, ein Verfahren zur automatischen Produktion von Bedruckstoffen auf wenigstens einer Druckmaschine mit wenigstens einem Rechner zu schaffen, welches bei der Abarbeitung von Druckaufträgen in einer Druckerwarteschlange hilft, Makulatur durch häufigen Wechsel zwischen Stillstand und Druckbetrieb zu vermeiden.

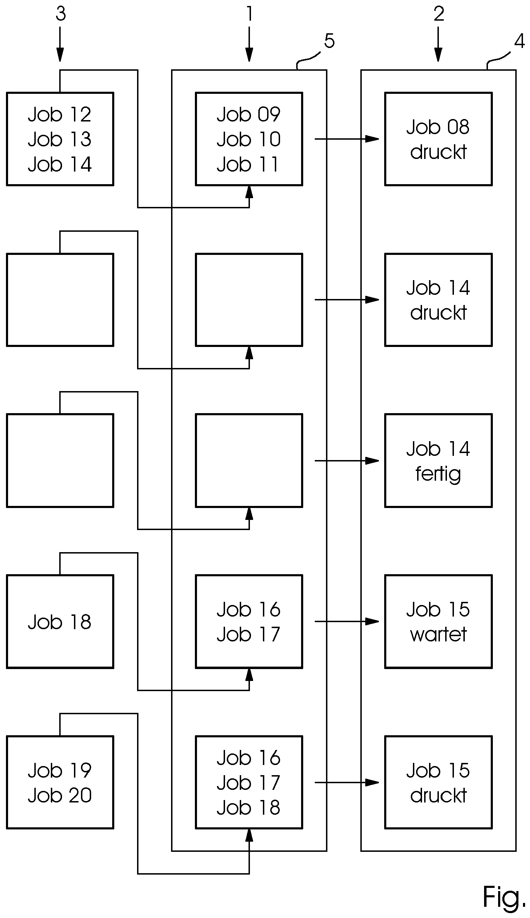

Diese Aufgabe wird erfindungsgemäß durch Patentanspruch 1 gelöst. Vorteilhafte Ausgestaltungen der vorliegenden Erfindung ergeben sich aus den abhängigen Patentansprüchen, der Beschreibung und der Figur.

Bei dem erfindungsgemäßen Verfahren ist vorgesehen, dass der Rechner die Druckaufträge in der Druckerwarteschlange vor dem Abarbeiten hinsichtlich vorgegebener Mindestmengen analysiert und dass die Druckaufträge auf der Druckmaschine erst dann abgearbeitet werden, wenn ein Schwellwert einer vorgegebenen Mindestmenge erreicht wird. Auf diese Art und Weise wird sichergestellt, dass die Druckmaschine nur in den Druckbetrieb geschaltet wird, wenn eine Mindestmenge für den Druckvorgang vorhanden ist und somit sichergestellt wird, dass bei zu kleinen Mengen durch häufiges An- und Abschalten der Druckmaschine unverhältnismäßig viel Makulatur entsteht. Bei jedem Anschalten der Druckmaschine entsteht eine bestimmte Menge Makulatur, welche vor allem dann ins Gewicht fällt, wenn die zu druckende Menge klein ist. Vor diesem Hintergrund ist erfindungsgemäß vorgesehen, dass die Mindestmenge so groß gewählt wird, dass das Verhältnis von verkaufsfähigen Bedruckstoffen und Bedruckstoffen in Makulaturqualität wirtschaftlich vernünftig ist.

In einer ersten vorteilhaften Ausgestaltung der Erfindung ist vorgesehen, dass die vorgegebene Mindestmenge eine Anzahl von Druckseiten beinhaltet. So macht es z.B. Sinn, bei einer Offsetdruckmaschine, welche beim Anfahren aus dem Standby-Betrieb zunächst 50 Seiten Makulatur produziert, eine Mindestmenge von 1000 Seiten vorzuhalten, bevor die Druckmaschine wieder in Betrieb genommen wird, so dass das Verhältnis zwischen den guten Bedruckstoffen und Makulatur nicht über 5 % beträgt. Dazu werden die in der Druckerwarteschlange eingehenden Druckaufträge hinsichtlich der Druckseitenanzahl analysiert und die Druckaufträge werden erst dann auf der Druckmaschine abgearbeitet, wenn die vorgegebene Mindestmenge von Druckseiten in der Druckerwarteschlange erreicht ist.

In einer alternativen Ausgestaltung der Erfindung ist vorgesehen, dass die vorgegebene Mindestmenge eine Anzahl von Druckprodukten beinhaltet. Hier kann z.B. eine Mindestmenge von 100 zu druckenden Druckprodukten eingegeben sein, vorher wird die Druckmaschine nicht in Betrieb genommen. Dies bedeutet z.B., dass ein Prospekt in einer Mindestauflage von 100 gedruckt werden muss, bevor die Druckmaschine in den Betrieb geht. Wenn in der Druckerwarteschlange zwei Prospekte sind, reicht selbstverständlich in diesem Beispiel für jeden Prospekt bereits eine Auflage von 50 aus. Diese Mindestmenge kann wiederum von der Ausgestaltung der Druckprodukte abhängig sein, so können umfangreiche Broschüren mit mehreren Seiten eine geringere Mindestmenge benötigen als Broschüren mit wenigen Seiten.

In einer weiteren Ausgestaltung der vorliegenden Erfindung ist vorgesehen, dass die Mindestmenge eine Anzahl von Druckaufträgen beinhaltet. So kann als vorgegebene Mindestmenge z.B. die Anzahl von fünf Druckaufträgen hinterlegt sein, so dass die Druckmaschine immer erst dann in Betrieb genommen wird, wenn wenigstens fünf Druckaufträge zur Abarbeitung anstehen.

Sinnvollerweise wird die Mindestmenge jeweils in Abhängigkeit der Eigenschaften der bei der Abarbeitung der Druckaufträge genutzten Druckmaschine, insbesondere der entstehenden Makulatur, festgelegt. Je weniger eine Druckmaschine bei der Inbetriebnahme an Makulatur produziert, desto geringer kann die Mindestmenge sein. So haben Offsetdruckmaschinen beim Anfahren eine wesentlich höhere Makulaturmenge, als Digitaldruckmaschinen wie z.B. Inkjet-Druckmaschinen, welche bereits mit der ersten Druckseite eine verkaufsfähige Qualität liefern können. Dennoch macht es unter Umständen auch bei Digitaldruckmaschinen Sinn, auch hier eine Mindestmenge von mehr als einer Seite festzulegen, da z.B. beim Anfahren einer Digitaldruckmaschine mehrere Einmessvorgänge vorgenommen werden und somit das Anfahren einer Druckmaschine verhältnismäßig viel Zeit benötigt, bis der erste Druck abgeliefert werden kann. Hier macht es Sinn, diese lange Vorlaufphase dadurch zu vermeiden, dass eine bestimmte Anzahl von Druckaufträgen abgewartet wird, bevor die Maschine gestartet wird, so dass die Digitaldruckmaschine nun mehrere Druckaufträge am Stück abarbeiten kann und somit die langwierige Aufwärmphase nur einmal anfällt.

In einer besonders vorteilhaften Ausgestaltung der vorliegenden Erfindung ist vorgesehen, dass der Rechner Teil einer Cloudlösung im Internet ist. Der Rechner zur Steuerung der Druckaufträge in der Druckerwarteschlange und Weiterleitung an die Druckmaschine muss nicht notwendigerweise der Rechner der Druckmaschine selbst sein, er kann auch ein beliebiger Rechner in der Druckerei oder sogar Teil einer Cloudlösung im Internet sein. In Abhängigkeit der ausgewählten Druckmaschine leitet der Rechner der Cloud dann die gesammelten Druckaufträge bei Erreichen des Schwellwerts der vorgegebenen Mindestmenge erst an die Druckmaschine weiter, welche diese dann hintereinander abarbeitet.

Vorteilhafterweise ist außerdem vorgesehen, dass die Druckmaschine sich in einem aktivierbaren Standby-Betrieb befindet, in dem sie durch den Rechner jederzeit automatisch in den Druckbetrieb geschaltet werden kann. Damit der Rechner bei Erreichen der vorgegebenen Mindestmenge die Druckmaschine in Betrieb nehmen kann, muss diese vom Rechner entsprechend aktivierbar sein. Zu diesem Zweck befindet sich die Druckmaschine in einem aktivierbaren Standby-Betrieb, so dass sie vom Rechner jederzeit automatisch ohne Zutun eines Bedieners wieder in den Druckbetrieb geschaltet werden kann. Dies schließt jedoch nicht aus, dass beim Anfahren der Druckmaschine der Bediener aufgefordert wird, bestimmte manuelle Handlungen wie das Wechseln einer Druckplatte oder das Einfüllen von Farbe in ein Druckwerk vorzunehmen. Wenn ein solcher manueller Eingriff durch den Bediener erforderlich ist, wird er jedoch vorzugsweise von der Steuerung der Druckmaschine akustisch oder optisch informiert, so dass der Bediener die entsprechenden manuellen Bedieneingriffe vornimmt.

Die vorliegende Erfindung wird nachfolgend anhand einer Figur näher beschrieben und erläutert.

Die Figur zeigt:
die Abarbeitung von mehreren Druckaufträgen einer Druckerwarteschlange auf einer Druckmaschine mit einem Rechner.

In der Figur ist in der linken Spalte die Auftragsliste 3 mit den Druckaufträgen abgebildet, welche einem Rechner 5, welcher sich in der Druckerei oder auch als Teil einer Cloudlösung im Internet befinden kann, zugeführt wird. Auf dem Rechner 5 wird in Form von Software eine Druckerwarteschlange 1 der zugehörigen Druckmaschine 4 gesteuert. In dieser Druckerwarteschlange 1 in der mittleren Spalte befinden sich alle Druckaufträge, welche auf der Druckmaschine 4 abgearbeitet werden sollen. Somit umfasst die mittlere Spalte alle Druckaufträge in der Druckerwarteschlange 1. In der rechten Spalte befindet sich der jeweils aktuelle Druckauftrag 2, welcher auf der Druckmaschine 4 abgearbeitet wird.

Die in der Auftragsliste 3 anstehenden Druckaufträge werden dabei automatisch in die Druckerwarteschlange 1 durch den Rechner 5 geladen. In der ersten Zeile ist zu erkennen, dass in der Druckerwarteschlange 1 drei Druckjobs vorhanden sind, während auf der Druckmaschine 4 gerade ein aktueller Druckauftrag 2 abgearbeitet wird. Weiterhin ist zu erkennen, dass in der Auftragsliste 3 drei weitere Druckjobs anstehen, welche noch in die Druckerwarteschlange 1 geladen werden. In der zweiten Zeile in der Figur ist zu erkennen, dass nun auch der letzte Druckjob aus der ersten Zeile abgearbeitet wird und weder in der Druckerwarteschlange 1 noch in der Auftragsliste 3 weitere Druckjobs anstehen. Somit wird der letzte Druckauftrag als aktueller Druckauftrag 2 auf der Druckmaschine 4 in Zeile 3 abgearbeitet und dann die Druckmaschine 4 durch den Rechner 5 in Standby Betrieb geschaltet.

Nach einer gewissen Zeit werden in der vierten Zeile neue Druckjobs in die Druckerwarteschlange 1 geladen, und ein erster Druckjob 2 wird bereits für die Druckmaschine 4 vorbereitet. Da aber weder in der Druckerwarteschlange 1 noch in der Auftragsliste 3 genügend Druckjobs vorhanden sind, wird der für die Druckmaschine 4 vorbereitete aktuelle Druckauftrag noch nicht abgearbeitet, sondern befindet sich in Wartestellung. In der fünften Zeile ist zu erkennen, dass inzwischen drei Druckjobs in der Druckerwarteschlange 1 vorhanden sind, und zwei weitere Druckjobs in der Auftragsliste 3 anstehen. In diesem Fall ist die vorgegebene Mindestmenge von vier abzuarbeitenden Druckjobs umfassend den wartenden Druckjob 2 auf der Druckmaschine 4 und die drei Druckaufträge in der Druckerwarteschlange 1 erreicht und die Druckmaschine 4 beginnt mit der Abarbeitung des aktuellen Druckauftrags 2. Im Ausführungsbeispiel in der Figur ist als Mindestmenge somit ein Maß von vier Druckaufträgen in der Druckerwarteschlange 1 festgelegt.

Alternativ kann auch eine bestimmte Anzahl von Seiten als Mindestmenge vorgegeben sein, in diesem Fall analysiert der Rechner 5 die anstehenden Druckaufträge in der Druckerwarteschlange 1 hinsichtlich der Seitenanzahl und beginnt dann mit der Abarbeitung des aktuellen Druckauftrags 2 auf der Druckmaschine 4, sobald die Mindestmenge an Druckseiten in der Druckerwarteschlange 1 erreicht ist.

Auf diese Art und Weise wird vermieden, dass bei Unterbrechungen aufgrund fehlender Druckaufträge in der Druckerwarteschlange 1 die Druckmaschine 4 wegen ein oder zwei Aufträgen ständig in den Standby-Betrieb und dann wieder in den Druckbetrieb geschaltet wird. Die Druckmaschine 4 wird erst dann aus dem Standby-Betrieb in den Druckbetrieb geschaltet, wenn genügend Druckaufträge anstehen und somit beim Anfahren der Druckmaschine nicht unverhältnismäßig viel Makulatur erzeugt wird.

### Bezugszeichenliste

- 1: Druckerwarteschlange der Druckmaschine
- 2: aktueller Druckauftrag auf der Druckmaschine
- 3: Auftragsliste der Druckaufträge
- 4: Druckmaschine
- 5: Rechner

## Patentansprüche

1. Verfahren zur automatischen Produktion von Bedruckstoffen auf wenigstens einer Druckmaschine (4) mit wenigstens einem Rechner (5), wobei dem Rechner (5) Druckaufträge (2) in einer Druckerwarteschlange (1) zugeführt werden,
**dadurch gekennzeichnet,**
**dass** der Rechner (5) die Druckaufträge (2) in der Druckerwarteschlange (1) vor dem Abarbeiten hinsichtlich vorgegebener Mindestmengen analysiert und dass die Druckaufträge (2) auf der Druckmaschine (4) erst dann abgearbeitet werden, wenn ein Schwellwert einer vorgegebenen Mindestmenge erreicht wird.

2. Verfahren nach Anspruch 1,
**dadurch gekennzeichnet,**
**dass** die vorgegebene Mindestmenge eine Anzahl von Druckseiten beinhaltet.

3. Verfahren nach Anspruch 1,
**dadurch gekennzeichnet,**
**dass** die vorgegebene Mindestmenge eine Anzahl von Druckprodukten beinhaltet.

4. Verfahren nach Anspruch 1,
**dadurch gekennzeichnet,**
**dass** die Mindestmenge eine Anzahl von Druckaufträgen (2) beinhaltet.

5. Verfahren nach einem der vorhergehenden Ansprüche,
**dadurch gekennzeichnet,**
**dass** die Mindestmenge in Abhängigkeit der Eigenschaften der bei der Abarbeitung der Druckaufträge genutzten Druckmaschine (4), insbesondere der entstehenden Makulatur, festgelegt wird.

6. Verfahren nach einem der vorhergehenden Ansprüche,
**dadurch gekennzeichnet,**
**dass** der Rechner (5) Teil einer Cloudlösung im Internet ist.

7. Verfahren nach einem der vorhergehenden Ansprüche,
**dadurch gekennzeichnet,**
**dass** die Druckmaschine (4) eine Offsetdruckmaschine ist.

8. Verfahren nach einem der vorhergehenden Ansprüche,
**dadurch gekennzeichnet,**
**dass** die Druckmaschine (4) eine Digitaldruckmaschine, insbesondere eine Inkjet-Druckmaschine, ist.

9. Verfahren nach einem der vorhergehenden Ansprüche,
**dadurch gekennzeichnet,**
**dass** die Druckmaschine (4) sich in einem aktivierbaren Standby-Betrieb befindet, in dem sie durch den Rechner (5) jederzeit automatisch in den Druckbetrieb geschaltet werden kann.
